# EUROPEAN PATENT SPECIFICATION

(11) **EP 2 865 285 B1**
(45) Date of publication and mention of the grant of the patent: **13.04.2016**
(21) Application number: 14466017.2
(22) Date of filing: 08.09.2014
(51) Int. Cl.: G02B 5/128, A41D 13/00, A41D 13/01, G02B 5/136, A41D 31/00

(54) **Joint of reflective tape and base fabric, especially on protective clothing**
Verbindung von reflektierendem Band und Basisgewebe, insbesondere auf Schutzbekleidung
Joint de bande réfléchissante et tissu de base, notamment sur des vêtements de protection

(30) Priority: 17.09.2013 CZ 20130709
(43) Date of publication of application: 29.04.2015
(73) Proprietor: DEVA F-M s.r.o., 73801 Frydek-Mistek (CZ)
(72) Inventor: Dedek, Jirí, 739 01 Baska (CZ)
(74) Representative: Halaxová, Zdenka

(56) References cited:
- EP-A2- 1 974 621
- WO-A1-95/31739
- CZ-U1- 26 447
- US-A1- 2006 103 935

## Description

### Field of the Invention

This invention relates to the joint of a reflective tape, formed by a layer of micro glass beads attached to an underlying fabric, with the base fabric, intended particularly for protective clothing.

### Prior State of the Art

Today, protective clothing and other products with desirable visibility at dusk or dawn or in bad weather conditions are fitted with reflective tapes. These are, in particular, work and protective clothing, sportswear and other items, such as backpacks, hats, clothing for school children, etc. The reflective tapes are made of different materials; most commonly there is a layer of micro glass beads attached to an underlying fabric. The reflective tapes may be thermally pressed onto the base fabric, but most often they are sewed on by aramid or polyester threads. As the reflective tape is rather rigid, it projects above the base fabric and the sewing thread does not immerse in its material as in the case of conventional textile tapes. When using such articles of clothing, the thread wears off and gets thinner by abrasion until it breaks eventually. The reflective tape then gets separated from the base fabric. There is a solution, when double seams are made on the sides of the reflective tape, which, however, does not solve the problem with abrasion. A more expensive solution is sewing the reflective tape on through a narrow strip of aramid beading. Although the beading protects the thread against wear, it usually covers 7-8% of the visible fluorescent part of the reflective tape. As it also gets stained quickly when in use, the aesthetic problem is also of concern.

WO 95/31739 discloses a reflective tape, formed by a layer of micro glass beads attached to an underlying fabric with the base fabric, intended particularly for protective clothing. The reflective tape may be sewn to the garment.

The aim of the invention is to provide a joint that would be strong and not subject to easy wear, without significantly increasing the costs.

### Nature of the Invention

The above task is solved to a great extent by a joint of the reflective tape with the base fabric according to the invention. The reflective tape is formed by a layer of micro glass beads attached to the underlying fabric, intended particularly for protective clothing. The essence of the technical solution lies in that, the polyester or aramid sewing thread with a diameter of 0.2 to 0.4 mm is embedded 1.5 to 3.0 mm from the edge of the reflective tape in a groove formed on the surface along the edges of the reflective tape. The depth of this groove is 0.15 to 0.20 mm. The groove is formed by means of ultrasonic and has preferably a semi-circular cross-section.

The advantage and a higher effect of this technical solution lie in that it eliminates the problem of the wear of the thread attaching the reflective tape to the underlying fabric. Torn off reflective tape due to the wear of the sewing thread is the first and most common problem of virtually all heavy-duty protective clothes requiring professional repair. According to the present technical solution, the sewing thread is recessed in the joint, thus minimising its abrasion in the use of the garment. Laboratory testing according to the prescribed standards for the determination of abrasion resistance showed that in the case of standard sewing of reflective tape the thread gets broken after 10,000 to 15,000 test cycles, while in the case of the joint according to the present technical solution the thread does not break even after 50,000 cycles.

### Figures in Drawings

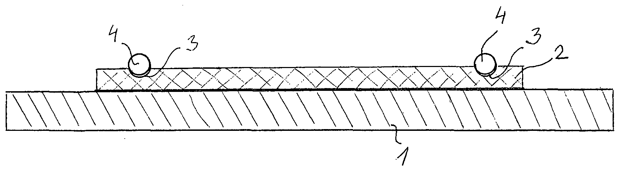

The invention is further described in more detail using the attached drawing, which shows a cross section of the reflective tape attached to the base fabric.

### Example of the Invention

A reflective tape 2, which is to be sewn on the base fabric 1 of an item of work or sports clothing or other products, such as backpacks, hats, or bags, with the aim of improving visibility in poor conditions. It consists of underlying fabric and a layer of micro glass beads attached to it. There is a groove 3 with a semicircular cross section formed along the edges of the top layer at a distance of 1.5 to 3.0 mm from the edges of the reflective tape 2, preferably by means of ultrasonic. The optimal depth of the groove 3 for the sewing thread 4 of 0.3 mm diameter is 0.2 mm. Polyester or aramid sewing thread 4 can be used, in particular, with a diameter of 0.2 to 0.4 mm. In the case of lockstitch sewing using a standard sewing machine, the thread 4 immerses into the groove 3 on the surface of the reflective tape 2. This creates a joint where the sewing thread 4 is not shown on the surface of the reflective tape 2.

### Industrial Application

The joint of the reflective tape and the base fabric of protective clothing, in particular, allows for industrial application not only for work and protective clothing, but also for sports clothing and other items, such as backpacks, bags, caps, etc., where good visibility in darkness or bad weather is required.

## Claims

1. A joint of a reflective tape, formed by a layer of micro glass beads attached to an underlying fabric, with the base fabric, intended particularly for protective clothing, ***characterised in that*** the polyester or aramid sewing thread (4), in particular, with a diameter of 0.2 to 0.4 mm is embedded 1.5 to 3.0 mm from the edge of the reflective tape (2) in a groove (3) formed on the surface along the edges of the reflective tape (2), the depth of the groove being 0.15 to 0.20 mm.

2. The joint of the reflective tape and the base fabric according to Claim 1, ***characterised in that*** the groove (3) has a semi-circular cross-section.

3. The joint of the reflective tape and the base fabric according to Claim 1, ***characterised in that*** the groove (3) is formed by means of ultrasonic.

## Patentansprüche

1. Die Verbindungsnaht des Reflexstreifens bestehend aus einer Schicht von Glas-Mikrokugeln, welche auf dem Grundgewebe fixiert sind, mit Grundtextilie, welche insbesondere für Schutzkleidung bestimmt ist, ***dadurch gekennzeichnet, dass*** der Nähzwirn (4), insbesondere Polyester- oder Aramidnähzwirn, mit einem Durchmesser von 0,2 bis 0,4 mm 1,5 bis 3,0 mm vom Rand des Reflexstreifens (2) in die Nut (3) eingebettet ist, die auf der Oberfläche entlang der Ränder des Reflexstreifens (2) gebildet ist, deren Tiefe 0,15 bis 0,20 mm ist.

2. Die Verbindungsnaht des Reflexstreifens mit dem Grundgewebe nach Anspruch *1, **dadurch gekennzeichnet, dass*** die Nut (3) einen halbkreisförmigen Querschnitt hat.

3. Die Verbindungsnaht des Reflexstreifens mit dem Grundgewebe nach Anspruch 1, ***dadurch gekennzeichnet, dass*** die Nut (3) durch Ultraschalleinwirkung gebildet ist.

## Revendications

1. Le joint de la bande réfléchissante formée par la couche de microsphères en verre fixées sur le tissu sous-jacent, avec le tissu de base, destiné notamment à des vêtements de protection, ***caractérisé par le fait que*** le fil à coudre (4), en particulier en polyester ou en aramide, d'un diamètre de 0,2 à 0,4 mm, est noyé 1,5 à 3,0 mm à partir du bord de la bande réfléchissante (2) dans la rainure (3) formée sur la surface le long des bords de la bande réfléchissante (2) dont la profondeur est de 0,15 à 0,20 mm.

2. Le joint de la bande réfléchissante avec le tissu de base selon la revendication 1, ***caractérisé par le fait que*** la section de la rainure (3) est semi-circulaire.

3. Le joint de la bande réfléchissante avec le tissu de base selon la revendication *1, **caractérisé par le fait que*** la rainure (3) est formée par sonification.
